# EUROPEAN PATENT SPECIFICATION

(11) **EP 1 446 896 B1**
(45) Date of publication and mention of the grant of the patent: **07.07.2010**
(21) Application number: 02783934.9
(22) Date of filing: 07.11.2002
(51) Int. Cl.: H04B 7/005, H04L 1/00

(54) **METHOD FOR LINK ADAPTATION AND TRANSMIT POWER CONTROL**
VERFAHREN ZUR STRECKENANPASSUNG UND SENDELEISTUNGSREGELUNG
PROCEDE PERMETTANT D'ADAPTER DES LIAISONS ET DE COMMANDER LA PUISSANCE DE TRANSMISSION

(30) Priority: 08.11.2001 US 334610 P
(43) Date of publication of application: 18.08.2004
(73) Proprietor: Telefonaktiebolaget L M Ericsson AB (Publ), 126 25 Stockholm (SE)
(72) Inventor: LARSSON, Peter, S-169 71 Solna (SE)
(74) Representative: Vejgaard, Christian
(86) International application number: PCT/SE2002/002034
(87) International publication number: WO 2003/041297

(56) References cited:
- EP-A1- 1 063 785
- EP-A2- 0 579 372
- WO-A1-00/57574
- WO-A1-01/78250
- WO-A2-99/07105
- US-A- 4 991 184

## Description

### FIELD OF THE INVENTION

The present invention relates to link adaptation, and more particularly, to a method for link adaptation without transferring link mode information between communicating nodes.

### BACKGROUND OF THE INVENTION

The IEEE 802.11 wireless LAN (WLAN) standard was developed in 1997 and enabled wireless LAN communications between various nodes. The IEEE 802.11 standard was extended with a new physical layer, based on OFDM (Orthogonal Frequency Division Multiplexing) and used with several high order QAM (quadrature amplitude modulator) constellations and various convolutional coding rates that enable up to seven different data rates. A similar standard designated IEEE 802.11 b for the 2.4 GHz band was also standardized and provides four different data rates.

Neither the standardization bodies nor any existing link adaptation algorithm defines any exchange mechanism for sending link adaptation control messages. The lack of an exchange mechanism for link adaptation messages has posed a considerable hurdle for 802.11 performance. Designers are required to rely upon indirect indications as to whether a correct link adaptation choice has been accomplished. Examples of these include the presence or absence of certain returned acknowledgments. Thus, some method of controlling link adaptation without explicit link mode signaling is needed.

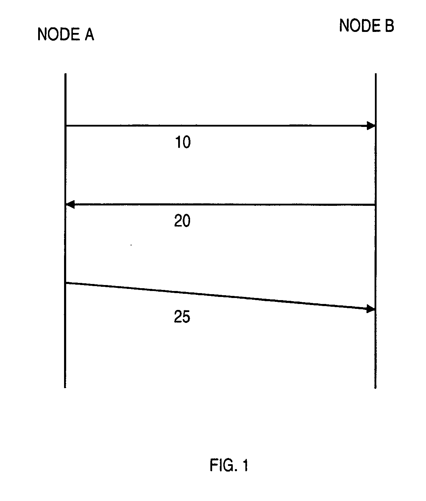

Referring now to the drawings, and more particularly to Fig. 1, wherein there is illustrated an example of a traditional link adaptation process. Node A sends at 10 a frame that enables Node B to determine reception quality. Node B uses this information within some type of algorithm or process 15 to select an optimal link mode for the communications directed from Node A to Node B. Node B subsequently informs Node A at 20 of the recommended link adaptation (LA) mode. Node A uses the recommended link mode for succeeding transmissions 25. This procedure is repeatedly employed for successive communications and enables continuous adaptation to changing link conditions. This procedure is similar to a closed loop transmit power control and may well be integrated within the power control circuitry.

In some wireless systems, one of the nodes may be physically attached to an access network. The access network may make the decision to use a certain link mode whereas the other nodes merely provides link mode recommendations or send mere measurement reports. This results in a slight asymmetry that is not directly apparent from Fig. 1 as Node A and Node B are not equivalent to each other. The main problem with this type of system is that there is no explicit signaling method defined for IEEE 802.11, and thus, the method is only applicable if the standard is extended with link adaptation signaling.

One conceivable link adaptation scheme for 802.11, which lacks an explicit link adaptation feedback mechanisms uses an indirect feedback which may be utilized by exploiting the presence and absence of return acknowledgments. The link modes are ramped up or down as a function of the response. However, this approach requires communications to endure for some time in order for a suitable rate to be found. The method of ramping up/down the link rate is not very efficient, as frame errors must be intentionally induced to determine the operating point.

The problem of requiring a signaling scheme for link adaptation lies in the method of the traditional link adaptation system that is implemented within a closed loop system requiring information to be transmitted between entities.

EP-0579372 discloses an open loop regulation in a wireless local area network (WLAN) wherein a station is transmitting information in a packet concerning transmitted power level and measured interference level. From this, a dynamic power control is accomplished: "This value is then utilized in an algorithm which determines a transmit level and defer threshold value, which are stored in a table to be utilized when the receiver station desires to transmit a packet to the transmitter station", cf. col. 4,1. 56 - col. 5, 1. 2. The two-part form of claim 1 is based on D1 noting the features found in common with D1 in the preamble. WO01/78250 discloses a closed loop power regulation. The link mode is not regulated.

WO99/07105 discloses a power regulation method for a multi-station network. It appears that the method corresponds to a closed loop regulation although very few details are given.

### SUMMARY OF THE INVENTION

The present invention overcomes the foregoing and other problems with a system and method for transferring information over a link between a first node and a second node. A frame is transmitted from the first node to the second node. The frame contains link data enabling the second node to determine a link mode for future transmissions. The frame is received at the second node wherein a determination of a link mode from the second node to the first node is made using the link data contained within the frame. Transmissions may then be made from the second node to the first node using the determined link mode.

Further advantages will appear from the following detailed description of the invention.

### BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention. In the drawings:
Fig. 1 illustrates a traditional link adaptation process;
Fig. 2 is a flow diagram illustrating a reference method, and
Fig. 3 is a flow diagram illustrating the method of the present invention.

### DETAILED DESCRIPTION OF EXEMPLARY EMBODIMENTS

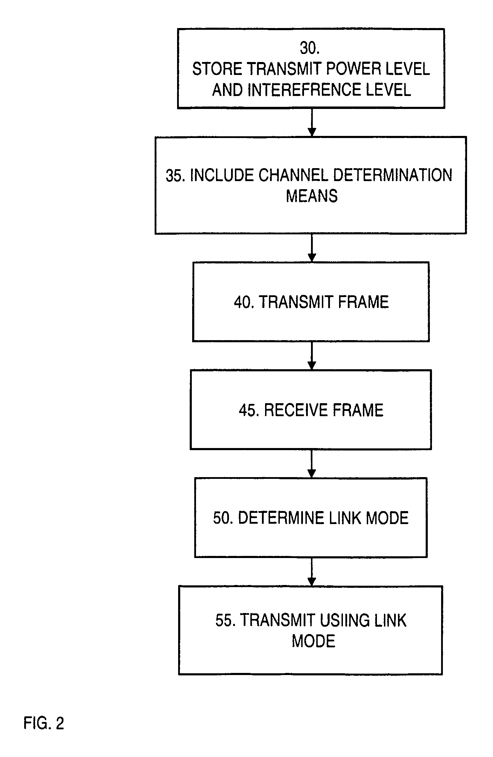

Referring now to the method illustrated and described with respect to the flow chart of Fig. 2. Initially, the transmit power level and the interference level of Node A are stored at step 30 in a frame to be transmitted from Node A to Node B. Additionally, some means for enabling a channel determination is included within the frame at step 35. There are essentially two ways of estimating a channel, either a so called pilot sequence (this may also be called pilot, pilot symbol, channel estimation sequence/symbol, training sequence/symbol), or through so-called blind channel estimation. Blind channel estimation, which is not so common, does not rely on specified pilot sequence, but may instead use data carrying symbols (or similar) and certain properties for the modulation in use. For example, knowledge of permitted modulation amplitudes and/or phase can be used to determine channel information. For the pilot sequence case, the receiver which has knowledge of the training sequence can make a good channel estimation. The design of the pilot sequences differ from system to system as also from modulation method to method. For example, the pilot sequences used for 802.11 a is accordingly specified in the standard. Node A transmits the frame at step 40 from Node A to Node B, and the frame is received at step 45.

In the IEEE 802.11 protocol, the frame could, for example, be a CF-POLL frame issued by an Access Point (AP) to a station (STA). Node A would convey the used transmit power and desired receive power within the same CF-POLL frame. The latter depends on the interference level experience at Node A and hence is the receive power level.

After Node B receives at step 45 the frame from Node A, Node B will have all the necessary information required to select a link rate/mode for subsequent messages transmitted from Node B to Node A. Using this information, Node B determines the link rate/mode at step 50. Node B may also take into account previous communication and derived channel information that is (still) relevant in determining link mode. Note that Node B determines the link mode for transmissions from Node B to Node A in contrast with the system described with respect to Fig. 1, wherein Node B determines the link mode for transmissions from Node A to Node B. Note that the particular algorithm or method used for determining the link rate/mode utilizing the information provided in the frame received from Node A may be done in any number of manners.

However, several approaches may be used. One approach may be to apply a radio resource management policy that the entire network benefits from, or a policy that single nodes strive to optimise their own performance without any particular concern of interference generated and harming other communications. The policy in a 802.11 network is more similar to the latter, i.e., each node tries to maximize their own performance. In light of this, each node may strive to select a link mode, but also transmit power, in such a manner that the nodes throughput is maximized. Optionally, while maximizing the throughput, each node may also select not to transmit with excessive power when using the fastest link mode, thereby saving transmit power and extending battery life time (whenever the battery is used).

One desirable method to select link mode that incorporates the features of the invention is to minimize the transmit power of node B, under the condition that throughput is maximized (and for the highest rate mode arbitrarily close to the highest rate). This may be conceptualised by an outgoing objective function f_{q}=f(S_{LM},P_{TX},H,I), where S_{LM} is the set of all link modes, P_{TX} is the transmit power within an allowed transmit power range of node B, H is the channel determined from node A to B (we assume reciprocity, or at least near reciprocity, of the channel) and I is the interference level at node A. The objective function may for example be the expected throughput, but other optimisation criteria can be employed as well (e.g. packet error rate). Now, we may impose a certain minimum quality condition, Qₘᵢₙ, that the objective function f_{q} must meet. Subsequently, the link modes within the set S_{LM} are tested for the allowed range of P_{TX}. The Combination that meets the condition Qₘᵢₙ and consumes the least power P_{TX} is selected. Alternatively, if P_{TX} can't be varied, the link mode giving the optimum quality, given by f_{q}, is selected. It is important to note that although we discuss link adaptation, it is generally not just limited to changing link modes (signal constellation and forward error correction coding) but may well include power control, provided the transmit power is not a fixed level. However, in the original 802.1 1 standard, transmit power is fixed, and hence the link adaptation will only include changes in link mode (i.e. constellation and FEC). Transmissions from Node B to Node A are performed at step 55 using the determined link mode.

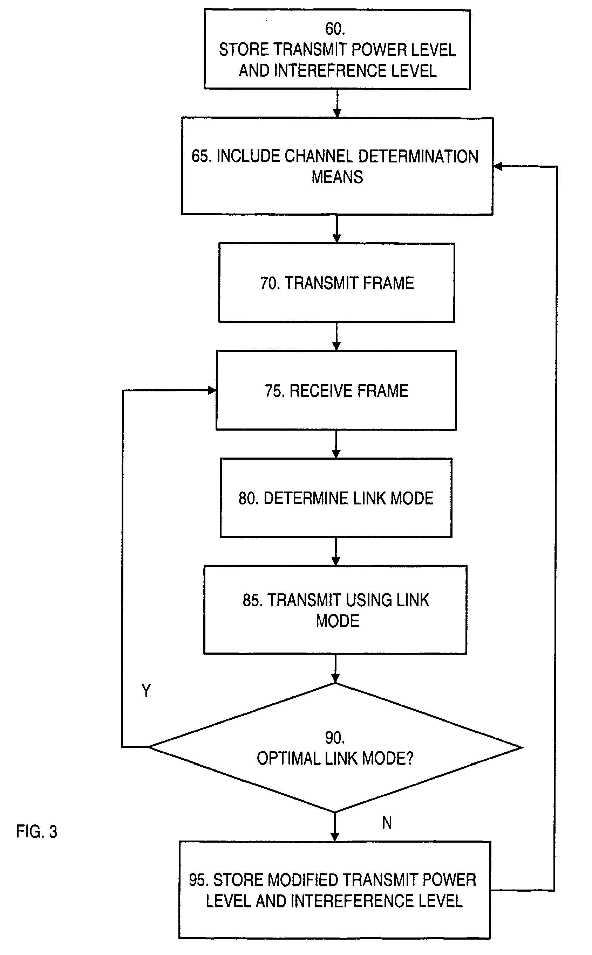

Referring now to Figs. 3, there is illustrated an extension of the proposed open loop link adaptation method enabling closed loop link adaptation. The first portion of the process operates the same as that described with respect to Fig. 2 wherein the transmit power level and the interference level of Node A are stored at step 60 in a frame to be transmitted from Node A to Node B.

Additionally, some means for enabling a channel determination is included within the frame at step 65. There are essentially two ways of estimating a channel, either a so called pilot sequence or through so-called blind channel estimation as discussed previously. Node A transmits the frame at step 70 from Node A to Node B and the frame is received at step 75. After Node B receives at step 75 the frame from Node A, Node B will have all the necessary information required to select a link rate/mode for subsequent messages transmitted from Node B to Node A. Using this information, Node B determines the link rate/mode at step 80. Transmissions from Node B to Node A are performed at step 85 using the determined link mode.

Upon receipt of a transmission at Node A from Node B using the determined link adaptation mode, Node A determines at step 90 whether an optimal link mode was used in the transmission from Node B to Node A. If so, control returns to step 60 and transmitter power level and interference level information are stored within a frame for transmission back to Node B. However, if it is determined that the optimal link mode was not used, Node A may enforce a link mode change for subsequent transmissions from Node B by manipulating the indicated transmit power level, interference level or a combination of both by storing at 95 modified versions of these within the frame to be transmitted back to Node B. This would cause the link mode determination at Node B to provide a substantially more optimal link mode. Lack of an optimal link mode may be the result of the improper setting of power levels or perhaps measurement inaccuracies existing within the channel transmissions. This would continue until an optimal link mode was achieved.

A particular situation may arise if other stations overhearing communications may misinterpret the link rate margin if it is adjusted as describe above. The problem is that an indicated interference level according to the closed loop extension at, for example, Node A (or possibly transmit power level) may cause other stations to use wrong link adaptations or transmit power later on. Whether this is a significant problem is not certain. However, in order to avoid this, two methods requiring standardization are proposed. These implementations are optional.

First, it is noted that certain frames can only be sent first in a frame exchange sequence. Examples of such frames are RTS, CTS and CF-POLL in 802.11. As it makes little sense to perform any closed loop adaptation for the first two frames, those frames shall never contain adjusted indicated interference levels, and therefore always enable other stations to determine correct transmit parameters when overhearing communications. It shall be standardized which frames that signal correct indicated interference level (or possibly transmit power level) levels.

A second method is based on that a bit is added to the PLCP service field which specifies if the correct parameter is shown or not. One interpretation of this bit is that it signals whether open loop or closed loop mode is used. In open loop, other STAs may unrestrictedly use information, but if closed is signaled, other STAs shall be more careful of using the information. Effectively, open loop will be signaled for the first two frames.

An additional benefit of the closed loop extension is that it can be useful when the link is non-reciprocal, such as when various antenna diversity arrangements are deployed. The closed loop extension is also directly applicable to extend open loop power control to closed loop power control as link adaptation and power control operate in complementary but different signal-to-noise ratio regions.

Although the invention has been described in the context of 802.11, a person skilled in the art readily observe that said invention is applicable in other standards, systems etc, where similar conditions prevail.

Indicated "interference field" and "transmit power field" may also relate to vectors rather than just scalars. The reason is that the link modes may encompass, not just various signal constellations (or more generally arbitrary modulation schemes) and forward error correction over a single radio channel, but multiple parallel radio channels and associated coding and modulation may be used whenever the transmitter, receiver or both employ multiple antennas. When N transmit antennas and M receive antennas are employed, one will in effect have M*N number of channels. This is called a MIMO channel (multiple input multiple output) and can be used in conjunction with forward error correcting coding to enhance robustness, spectral efficiency or both.

An alternative is that the transmitter has N antennas and the receiver has only one antenna. This type of channel is called MISO (multiple input single output) and may be primarily used for enhancing communication robustness. Although SIMO channels (single input multiple output) also exist as concept, there is no need to use a vector indication at the transmit side as the transmitter only has one antenna. Various types of forward error correction coding methods have been developed, and still are, as the research area of MIMO/MISO communication area is relatively new, for MIMO and MISO over the last several years. A worked out taxonomy is still lacking for MIMO/MISO coding, therefore various names flourish in the research area. Examples of codes that may be used over MIMO/MISO channels are STC (Space Time Coding), MIMO codes (only useful for MIMO), transmit diversity (only useful for MISO), MISO codes (only useful for MISO), BLAST (Bell Labs Layered Space-Time) codes (only useful for MEMO).

It is believed that the operation and construction of the present invention will be apparent from the foregoing description and, while the invention shown and described herein has been characterized as particular embodiments, changes and modifications may be made therein without departing from the invention as defined in the following claims.

## Claims

1. A method for transferring information over a link between a first node (A) and a second node (B), comprising the steps of:
(-) the first node (A) storing (60) link data comprising the transmit power level, then interference level experienced at the first node (A) and means for a channel determination in a first frame (65);
(a) the first node (A) transmitting the first frame to the second node (B), (70);
(b) the second node (B) receiving the first frame (75);
(c) the second node (B) determining a link mode (80) based on the transmit power level, the interference level experienced at the first node (A) and means for channel determination for transmission from the second node (B) to the first node (A);
(d) the second node (B) transmitting a subsequent frame to the first node (A) using the determined link mode (85);
(e) the first node (A) receiving the transmitted data from the second node (B); **characterized in that**
(f) the first node (A) determining whether an optimal link mode was used for transmitting the second subsequent frame from the second node (B) to the first node (A) (90);
(g) if an optimal link mode was not used, transmitting a next frame (70) from the first node (A) to the second node (B), the next frame containing adjusted link data, and
(-) the second node (B) determining a new link mode (80) using the adjusted link mode.

2. Method according to claim 1, wherein if an optimal link mode was used in the transmission from the second node (B) to the first node (A), the transmitter power level and interference value information are stored within a frame for transmission back to the second node (B).

3. Method according to claim 1 wherein if an optimal link mode was not used in the transmission from the second node (B) to the first node (A), the first node (A) enforcing a link mode change for subsequent transmissions from the second node (B) by manipulating the indicated transmit power level, interference level or combination of both by storing (95) a modified version of these within the frame to be transmitted back to the second node (B).

4. A method according to claim 1, wherein the first node (A) is an Access Point (AP) and the second node (B) is Station (STA) and the frame a transmitted from the first node (A) is a CF poll issued by the access point.

5. The method of claim 1, wherein the means for channel estimation involves use of a pilot sequence or is based on blind channel estimation.

6. The method of claim 1, wherein the link data comprises vectors.

7. The method of claim 1, further including the step of repeating steps (a)-(g) for successive frame transmissions.

8. The method of claim 1, further including the step of determining transmit power using the link data.

9. The method of claim 1, wherein the interference level further includes spectral distribution.

10. The method according to claim 1, wherein the link mode involves signal constellation and / or forward error correction coding.

## Patentansprüche

1. Verfahren zum Übertragen von Information über eine Verbindung zwischen einem ersten Knoten (A) und einem zweiten Knoten (B), folgende Schritte umfassend:
(-) der erste Knoten (A) speichert (60) Verbindungsdaten, die Folgendes umfassen: den Sendeleistungspegel, den Störpegel, der am ersten Knoten (A) erfahren wird, und ein Mittel zur Kanalbestimmung in einem ersten Rahmen (65);
(a) der erste Knoten (A) überträgt den ersten Rahmen an den zweiten Knoten (B), (70);
(b) der zweite Knoten (B) empfängt den ersten Rahmen (75);
(c) der zweite Knoten (B) bestimmt einen Verbindungsmodus (80) auf der Basis des Sendeleistungspegels, des Störpegels, der am ersten Knoten (A) erfahren wird, und des Mittels zur Kanalbestimmung zur Übertragung vom zweiten Knoten (B) an den ersten Knoten (A);
(d) der zweite Knoten (B) überträgt einen nachfolgenden Rahmen an den ersten Knoten (A) unter Verwendung des bestimmten Verbindungsmodus (85);
(e) der erste Knoten (A) empfängt die übertragenen Daten vom zweiten Knoten (B); **dadurch gekennzeichnet, dass**
(f) der erste Knoten (A) bestimmt, ob ein optimaler Verbindungsmodus verwendet wurde, um den zweiten nachfolgenden Rahmen vom zweiten Knoten (B) an den ersten Knoten (A) zu übertragen (90);
(g) falls kein optimaler Verbindungsmodus verwendet wurde, Übertragen eines nächsten Rahmens (70) vom ersten Knoten (A) an den zweiten Knoten (B), wobei der nächste Rahmen angepasste Verbindungsdaten enthält, und
(-) der zweite Knoten (B) bestimmt einen neuen Verbindungsmodus (80) unter Verwendung des angepassten Verbindungsmodus.

2. Verfahren nach Anspruch 1, worin, falls in der Übertragung vom zweiten Knoten (B) an den ersten Knoten (A) ein optimaler Verbindungsmodus verwendet wurde, der Sendeleistungspegel und die Störwertinformation innerhalb eines Rahmens zur Rückübertragung an den zweiten Knoten (B) gespeichert werden.

3. Verfahren nach Anspruch 1, worin, falls in der Übertragung vom zweiten Knoten (B) an den ersten Knoten (A) kein optimale Verbindungsmodus verwendet wurde, der erste Knoten (A) eine Verbindungsmodusänderung für die nachfolgenden übertragungen vom zweiten Knoten (B) forciert durch Manipulieren des angezeigten Sendeleistungspegels, des Störpegels oder einer Kombination von beiden durch Speichern (95) einer modifizierten Version von diesen innerhalb des Rahmens, der an den zweiten Knoten (B) zurückzuübertragen ist.

4. Verfahren nach Anspruch 1, worin der erste Knoten (A) ein Zugangspunkt (AP) ist und der zweite Knoten (B) eine Station (STA) ist und der vom ersten Knoten (A) übertragene Rahmen ein vom Zugangspunkt ausgegebner CF-Poll ist.

5. Verfahren nach Anspruch 1, worin das Mittel zur Kanalschätzung die Verwendung einer Pilotsequenz involviert oder auf blinder Kanalschätzung basiert.

6. Verfahren nach Anspruch 1, worin die Verbindungsdaten Vektoren umfassen.

7. Verfahren nach Anspruch 1, außerdem den Schritt umfassend, die Schritte (a)-(g) für aufeinanderfolgende Rahmenübertragungen zu wiederholen.

8. Verfahren nach Anspruch 1, außerdem den Schritt umfassend, Sendeleistung unter Verwendung der Verbindungsdaten zu bestimmen.

9. Verfahren nach Anspruch 1, worin der Störpegel außerdem spektrale Verteilung enthält.

10. Verfahren nach Anspruch 1, worin der Verbindungslnodus Signalkonstellation und/oder Vorwärtsfehlerkorrekturcodierung involviert.

## Revendications

1. Procédé destiné à transférer des informations sur une liaison entre un premier noeud (A) et un second noeud (B), comprenant les étapes ci-dessous dans lesquelles:
(-) le premier noeud (A) stocke (60) des données de liaison comportant le niveau de puissance de transmission, le niveau de brouillage occasionné au niveau du premier noeud (A) et un moyen permettant une détermination de canal dans une première trame (65);
(a) le premier noeud (A) transmet la première trame au second noeud (B), (70);
(b) le second noeud (B) reçoit la première trame (75);
(c) le second noeud (B) détermine un mode de liaison (80) sur la base du niveau de puissance de transmission, du niveau de brouillage occasionné au niveau du premier noeud (A) et du moyen de détermination de canal pour une transmission du second noeud (B) au premier noeud (A);
(d) le second noeud (B) transmet une trame subséquente au premier noeud (A) en faisant appel au mode de liaison déterminé (85);
(e) le premier noeud (A) reçoit les données transmises partir du second noeud (B); **caractérisé en ce que**:
(f) le premier noeud (A) détermine si un mode de liaison optimal a été utilisé pour transmettre la seconde trame subséquente du second noeud (B) au premier noeud (A) (90);
(g) si un mode de liaison optimal n'a pas été utilisé, il transmet une trame successive (70) du premier noeud (A) au second noeud (B), la trame successive contenant des données de liaison ajustées, et
(-) le second noeud (B) détermine un nouveau mode de liaison (80) en utilisant le mode de liaison ajusté.

2. Procédé selon la revendication 1, dans lequel, si un mode de liaison optimal a été utilisé dans la transmission du second noeud (B) au premier noeud (A), le niveau de puissance et des informations de valeur de brouillage de l'émetteur sont stockés dans une trame en vue d'une retransmission au second noeud (B).

3. Procédé selon la revendication 1, dans lequel, si un mode de liaison optimal n'a pas été utilisé dans la transmission du second noeud (B) au premier noeud (A), le premier noeud (A) applique une modification de mode de liaison pour les transmissions subséquentes à partir du second noeud (B) en manipulant le niveau de puissance de transmission indiqué, le niveau de brouillage indiqué ou une combinaison de cela en stockant (95) une version modifiée de ces niveaux dans la trame destinée à être retransmise vers le second noeud (B).

4. Procédé selon la revendication 1, dans lequel le premier noeud (A) est un point d'accès (AP) et le second noeud (B) est une station (STA), et la trame transmise par le premier noeud (A) est une interrogation CF émise par le point d'accès.

5. Procédé selon la revendication 1, dans lequel le moyen d'estimation de canal implique l'utilisation d'une séquence pilote ou est basé sur une estimation de canal à l'aveugle.

6. Procédé selon la revendication 1, dans lequel les données de liaison comportent des vecteurs.

7. Procédé selon la revendication 1, comprenant en outre l'étape consistant à répéter les étapes (a) à (g) pour les transmissions de trames successive.

8. Procédé selon la revendication 1, comprenant en outre une étape consistant à déterminer la puissance de transmission en utilisant les données de liaison.

9. Procédé selon la revendication 1, dans lequel le niveau de brouillage comporte également une distribution spectrale.

10. Procédé selon la revendication 1, dans lequel le mode de liaison implique un codage de constellation de signal et/ou de correction d'erreurs sans voie de retour.
